# EUROPEAN PATENT APPLICATION

(11) **EP 2 426 452 A1**
(43) Date of publication of application: **07.03.2012**
(21) Application number: 10175361.4
(22) Date of filing: 06.09.2010
(51) Int. Cl.: F25J 1/02, F01D 15/00, F02C 3/10, F02C 7/143, F01D 19/00

(54) **Method and apparatus for cooling a gaseous hydrocarbon stream**

(71) Applicant: Shell Internationale Research Maatschappij B.V., 2596 HR The Hague (NL)
(72) Inventor: Van de Lisdonk, Carolus Antonius Cornelis, 2596HR The Hague (NL); Tanaeva, Irina, 2596HR The Hague (NL); Geijsel, Joannes Ignatius, 2596HR The Hague (NL); Meiring, Wouter Jan, 2288 GS Rijswijk (NL); Straver, Alexander Emanuel Maria, 2596HR The Hague (NL)
(74) Representative: Matthezing, Robert Maarten

(57) **Abstract**

A gaseous hydrocarbon stream (10) is cooled against a first refrigerant and a second refrigerant, to produce a liquefied hydrocarbon stream (20). The first refrigerant is cycled in a first refrigerant circuit (100), comprising compressing in a first compressor train (110) comprising one or more first compressors on a common drive shaft (215). The second refrigerant is cycled in a second refrigerant circuit (200), comprising compressing in a second compressor train (210) comprising one or more second compressors on said common drive shaft (215). The common drive shaft (215) is driven with one single gas turbine (220). The single gas turbine (220) is a multiple shaft gas turbine with a shaft power for mechanical drive of at least 40 MW, comprising at least one auxiliary turbine (180) and at least one inlet air compressor (160) mechanically connected to the auxiliary turbine (180) via a first internal shaft (22), and a power turbine (190) drivingly engaged with the common drive shaft (215), which power turbine (190) is separately rotatable from the first internal shaft (22).

## Description

The present invention relates to a method of cooling a gaseous hydrocarbon stream to produce a liquefied hydrocarbon stream.

A common hydrocarbon stream to be liquefied is natural gas. There are many types of processes that can be used to liquefy natural gas. Many of these processes involve two or more successive refrigerant cycles, often in a cascaded arrangement, for progressively lowering the temperature of the natural gas. Such refrigeration cycles typically comprise refrigerant compressors to recompress the refrigerants in the respective cycles after they have absorbed heat from the natural gas.

WO 97/33131 describes an installation for producing liquefied natural gas wherein a pre-cooling circuit and a main cooling circuit are used for cooling the natural gas. Each of the cooling circuits comprises at least one compressor for compressing the cooling medium of that circuit. The compressors of the pre-cooling circuit and the main cooling circuit and the gas turbine and the auxiliary engine are fixedly interconnected, so that the compressors in the precooling circuit and the main cooling circuit are driven by a single common gas turbine and auxiliary engine.

The disclosure of WO 97/33131 is illustrated with an example based on a single shaft gas turbine (General Electric Frame 7; 85 MW) which produces power firstly at high drive speed (RPM) and only within a limited drive speed region. A drawback of the line-up of WO 97/33131 is that it is very important that start-up of the unit takes place in a secure manner. Relief possibilities for the equipment during start-up of the unit are absolutely necessary.

The present invention provides a method of cooling a gaseous hydrocarbon stream to produce a liquefied hydrocarbon stream, comprising:
- cycling a first refrigerant in a first refrigerant circuit, comprising passing at least a first part of the first refrigerant from at least one first heat exchanger to a first compressor train comprising one or more first compressors on a common drive shaft without passing through any other compressor that is not on the common drive shaft, compressing at least the first part of the first refrigerant in the first compressor train, and passing the at least first part of the first refrigerant from the first compressor train to the at least one first heat exchanger without passing through any other compressor that is not on the common drive shaft;
- cycling a second refrigerant in a second refrigerant circuit, comprising passing at least a first part of the second refrigerant from at least one second heat exchanger to a second compressor train comprising one or more second compressors on said common drive shaft without passing through any other compressor that is not on the common drive shaft, compressing said first part of the second refrigerant in the second compressor train, and passing the at least first part of the second refrigerant from the second compressor train to the at least one second heat exchanger without passing through any other compressor that is not on the common drive shaft;
- providing a liquefied hydrocarbon stream comprising heat exchanging of a hydrocarbon stream against the first refrigerant in the at least one first heat exchanger and against the second refrigerant in the at least one second heat exchanger;
- driving the common drive shaft with each of the at least one first compressor and each of the at least one second compressor in the first and second compressor trains with one single gas turbine, which single gas turbine is a multiple shaft gas turbine with a shaft power for mechanical drive of at least 40 MW under ISO conditions, comprising at least one auxiliary turbine and at least one inlet air compressor mechanically connected to the auxiliary turbine via a first internal shaft, a combustion chamber arranged downstream of the at least one inlet air compressor to receive compressed combustion air, said auxiliary turbine arranged downstream of the combustion chamber to receive a combusted stream from the combustion chamber, and a power turbine drivingly engaged with the common drive shaft, which power turbine is separately rotatable from the first internal shaft.

Moreover, an apparatus is provided, arranged to carry out these process steps.

The invention further provides an apparatus for cooling a gaseous hydrocarbon stream to produce a liquefied hydrocarbon stream, comprising:
- a first refrigerant circuit comprising a first refrigerant, a first compressor train comprising one or more first compressors on a common drive shaft, the first compressor arranged to compress at least a first part of said first refrigerant;
- at least one first heat exchanger fluidly connected to the first compressor train via a first low pressure path and a first high pressure path, the first low pressure path arranged to convey at least the first part of the first refrigerant from the at least one first heat exchanger to the first compressor train and being free from any other compressor that is not on the common drive shaft, and the first high pressure path arranged to convey at least the first part of the first refrigerant from the first compressor train to the at least one first heat exchanger and being free from any other compressor that is not on the common drive shaft;

- a second refrigerant circuit comprising a second refrigerant, a second compressor train comprising one or more second compressors on said common drive shaft, the second compressor train arranged to compress at least a first part of said second refrigerant;
- at least one second heat exchanger fluidly connected to the second compressor train via a second low pressure path and a second high pressure path, the second low pressure path arranged to convey at least the first part of the second refrigerant from the at least one second heat exchanger to the second compressor train and being free from any other compressor that is not on the common drive shaft, and the second high pressure path arranged to convey at least the first part of the second refrigerant from the second compressor train to the at least one second heat exchanger and being free from any other compressor that is not on the common drive shaft;
- a hydrocarbon path, connecting a source of a gaseous hydrocarbon stream to a discharge channel for a liquefied hydrocarbon stream, and passing through the at least one first heat exchanger in indirect heat exchanging arrangement with the first refrigerant and through the at least one second heat exchanger in indirect heat exchanging arrangement with the second refrigerant,
- one single gas turbine drivingly engaged with the common drive shaft with each of the at least one first compressor and each of the at least one second compressor in the first and second compressor trains, which single gas turbine is a multiple shaft gas turbine with a shaft power for mechanical drive of at least 40 MW under ISO conditions, comprising at least one auxiliary turbine and at least one inlet air compressor mechanically connected to the auxiliary turbine via a first internal shaft, a combustion chamber arranged downstream of the at least one inlet air compressor to receive compressed combustion air, said auxiliary turbine arranged downstream of the combustion chamber to receive a combusted stream from the combustion chamber, and a power turbine drivingly engaged with the common drive shaft, which power turbine is separately rotatable from the first internal shaft.

The relevant ISO conditions are specified in ISO standard 2314.

The invention will now be further illustrated by way of example and with reference to one or more figures in the accompanying drawing, wherein
Fig. 1 schematically shows an apparatus and method for cooling and liquefying a hydrocarbon stream according to an embodiment of the invention;
Fig. 2 schematically shows a schematic representation of a multiple axis gas turbine as an example for the present invention;
Fig. 3 schematically shows an example of a chilling refrigerant circuit for actively chilling of the coolant fluid;
Fig. 4 schematically shows a detailed drive scheme that can be used in the invention;
Fig. 5 schematically shows a detailed alternative drive scheme that can be used in the invention;
Fig. 6 schematically shows yet another detailed alternative drive scheme that can be used in the invention; and
Fig. 7 schematically shows an example of gas turbine employing intercooling chilling that can be used in the invention;
Fig. 8 schematically shows another example of a gas turbine that can be used in the invention;
Fig. 9 schematically shows yet another example of a gas turbine that can be used in the invention.

In the description of these figures hereinbelow, a single reference number has been assigned to a line as well as a stream carried in that line. The same reference numbers refer to similar components, streams or lines.

It is presently proposed to employ one single gas turbine, in the form of a large multiple shaft gas turbine of at least 40 MW shaft power for mechanical drive, comprising at least one inlet air compressor and one auxiliary turbine mechanically connected via a first internal shaft, and a power turbine drivingly engaged with a common drive shaft but separately rotatable from the first internal shaft, whereby each of the at least one first compressor and each of the at least one second compressor in the first and second compressor trains of the hydrocarbon liquefaction line-up are on said common drive shaft.

Herewith is achieved that the first internal shaft with the at least one inlet air compressor and one auxiliary turbine can be rotated independently from the load which the power turbine experiences. Therefore, the single gas turbine can be started up using a start up motor that selectively imparts rotation to the first internal shaft during an initial phase of starting up of the gas turbine and compressor trains, until the first internal shaft can rotate exclusively by the action of the combusted stream from the combustion chamber in the auxiliary turbine.

Not all gas turbines rated with shaft power for mechanical drive of at least 40 MW under ISO conditions have multiple shafts whereby the power turbine is separately rotatable from the first (core) internal shaft. But by selecting such a gas turbine for rotating both the first and second compressor trains, no special relieve actions are necessary during the start up phase of the gas turbine.

An advantage of the invention is that bypass valves, typically provided on the first and or second compressor trains, can be operated to optimize or control the operating conditions of the compressors without having to worry about relieve actions for the benefit of the driving equipment.

A further advantage is that the first and second compressor trains on the common drive shaft can be started up exclusively on the shaft power generated by the power turbine of the single gas turbine. In preferred embodiments, no additional mover such as a start up motor is drivingly connected to the common drive shaft in addition to said common gas turbine during starting up of the first and second compressor trains. More preferably, no additional mover such as a helper motor is drivingly connected to the common drive shaft in addition to said common gas turbine during normal operation of the first and second compressor trains either, i.e. starting up. Thus, preferably common drive shaft does not comprise any additional drive means other than the single gas turbine.

The term "common drive shaft" used herein is not intended to be limited to a unitary shaft: it is intended to at least cover a composite shaft formed out of two or more interconnected parts as well.

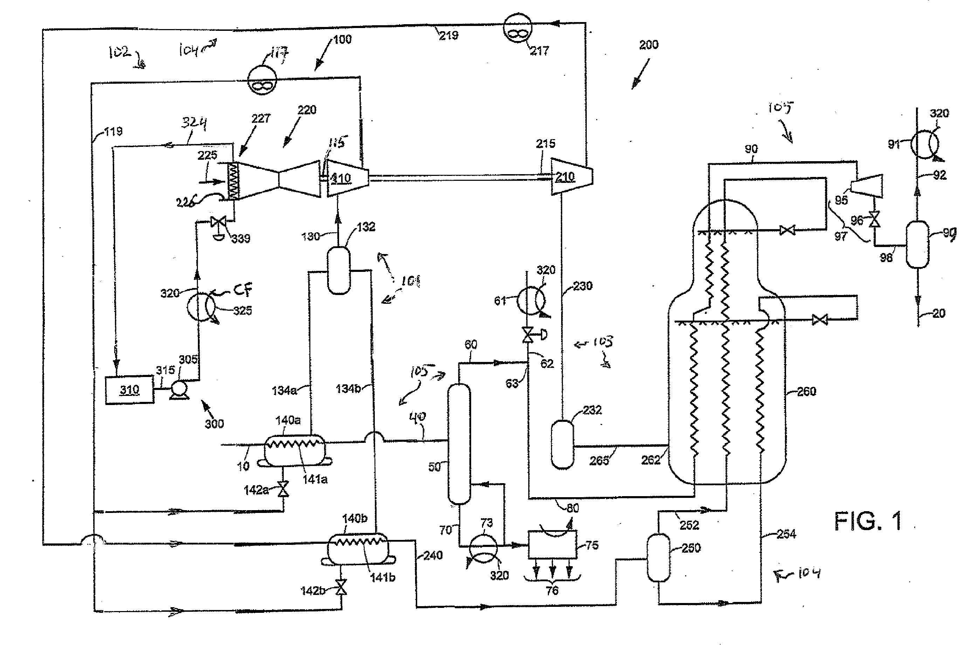

Referring now to Figure 1, there is shown an apparatus for cooling a gaseous hydrocarbon stream 10 to produce a liquefied hydrocarbon stream 20. The apparatus comprises a first refrigerant circuit 100 and a second refrigerant circuit 200.

The first refrigerant circuit 100 comprises a system of lines containing a first refrigerant that can be cycled through the circuit. The second refrigerant circuit comprises a separate system of lines, containing a second refrigerant that can be cycled through the second refrigerant circuit 200. These first and second refrigerant circuits may be separate from each other at least in the sense that there is no fluid communication between them. The first refrigerant may have a composition, as determined immediately downstream of the first compressor train 110, that is different from the composition of the second refrigerant, as determined immediately downstream of the second compressor train 210. Preferably, the composition of the first refrigerant adapted for cooling the gaseous hydrocarbon stream from the ambient temperature to an intermediate temperature, and the composition of the second refrigerant is preferably adapted for further cooling from the intermediate temperature to the final temperature.

The first refrigerant circuit 100 comprises a first compressor train 110 comprising one or more first compressors on a common drive shaft 215. The first compressor train 110 is arranged to compress at least a first part of the first refrigerant in line 130. As a precaution, the refrigerant in line 130 may have passed through an optional suction drum 132 to ensure that no liquid constituents are fed into any compressor of the first compressor train 110.

The second refrigerant circuit 200 comprises a second compressor train 210 comprising one or more second compressors on the common drive shaft 215. The second compressor train 210 is arranged to compress at least a first part of the second refrigerant in line 230. As a precaution, the refrigerant in line 230 may have passed through an optional suction drum 232 to ensure that no liquid constituents are fed into any of the second compressors in the second compressor train 210.

An output shaft 115 of one single gas turbine 220 is drivingly connected to the common drive shaft 215 by which all of the first compressors of the first compressor train 110 and all of the second compressors of the second compressor train 210 are driven.

The single gas turbine 220 comprises a combustion air inlet system 226, through which a first inlet air stream 225 can pass to the single gas turbine 220 for combustion therein. The first inlet air stream 225 may be obtained from an air source being at an ambient temperature. The combustion air inlet system 226 optionally comprises an inlet air cooling heat exchanger 227 in the form of an indirect heat exchanger wherein the first inlet air stream 225 can be heat exchanged against a stream of a chilled coolant 320. This option will be discussed in more detail below.

Optionally, one or more filters may be provided in the first inlet air stream 225 (not shown) to filter the air before it is compressed in the single gas turbine 220.

One or more first heat exchangers 140a, 140b is/are provided. They are fluidly connected to the first compressor train 110 via a first low pressure path (generally indicated by 101) and a first high pressure path (generally indicated by 102).

In the context of the present application, the terms "low pressure path" and "high pressure path" are intended as identifiers for various paths in the process scheme and apparatus, and not intented to define a pressure value. However, in embodiments the terms "low pressure" and "high pressure" may be interpreted relative to each other, whereby the pressure in the low pressure path in a selected refrigerant circuit is lower than the pressure in the high pressure path of that selected refrigerant circuit.

The first low pressure path 101 is arranged to convey at least a first part of the first refrigerant from at least one first heat exchanger 140a, 140b to the first compressor train 110. It is free from any other compressor; in any case it is free from any other compressor that is not on the common drive shaft 215. In the embodiment of Figure 1, the first low pressure path 101 consists of a line 134a, 134b from at least one of the first heat exchangers 140a, 140b to an optional first suction drum 132 and a first suction line 130 from the optional suction drum 132 to an inlet of the first compressor train 110.

The first high pressure path 102 is arranged to convey at least the first part of the first refrigerant from the first compressor train 110 to the at least one first heat exchanger 140a, 140b. It is free from any other compressor; in any case it is free from any other compressor that is not on the common drive shaft 215. In the embodiment of Figure 1, the first high pressure path 102 consists of line 119 which passes through one or more first ambient coolers 117.

Furthermore, one or more second heat exchangers is/are provided. In the embodiment of Figure 1 there is one second heat exchanger 260. It is fluidly connected to the second compressor train 210 via a second low pressure path (generally indicated by 103) and a second high pressure path (generally indicated by 104).

The second low pressure path 103 is arranged to convey at least a first part of the second refrigerant from the second heat exchanger 260 to the second compressor train 210. It is free from any other compressor; in any case it is free from any other compressor that is not on the common drive shaft 215. In the embodiment of Figure 1, the second low pressure path 103 consists of line 265 connecting the second heat exchanger 260 to an optional second suction drum 232 and a second suction line 230 from the optional second suction drum 232 to an inlet of the second compressor train 210.

The second high pressure path 104 is arranged to convey at least the first part of the second refrigerant from the second compressor train 210 to the second heat exchanger 260. It is free from any other compressor; in any case it is free from any other compressor that is not on the common drive shaft 215. In the embodiment of Figure 1, the second low pressure path 104 consists of line 219 which passes through one or more second ambient coolers 217 and connects the second heat exchanger 260 to one or more of the first heat exchangers 140b; and a line 240 that connects the one or more first heat exchangers 140b to an optional refrigerant gas/liquid separator 250, and lines 252 and 254 each connecting the optional refrigerant gas/liquid separator 250 with the second heat exchanger 260.

A hydrocarbon path (generally indicated by 105) is present, which connects a source of a gaseous hydrocarbon stream, in this case line 10, to a discharge channel for a liquefied hydrocarbon stream, in this case represented by line 20. It passes through the at least one of the one or more first heat exchangers (140a), in indirect heat exchanging arrangement with the first refrigerant, and through the second heat exchanger 260, in indirect heat exchanging arrangement with the second refrigerant. In the embodiment of Figure 1, the hydrocarbon path 105 consists of inlet line 10, a connected to a warm tube or warm tube bundle 141a of the first heat exchanger 140a, optional withdrawing means in the form of an optional gas/liquid separator 50 connected to the first heat exchanger 140a via a line 40, a vapour line 60 connecting the optional gas/liquid separator to line 80, which leads to the second heat exchanger 260.

Described in more detail, the suction inlet of the second compressor train 210 is connected to a second refrigerant outlet 262 of the second heat exchanger 260 via the line 230 and the optional suction drum 232. The second heat exchanger 260 is one of one or more second heat exchangers, arranged to receive and liquefy a cooled hydrocarbon stream in line 80, so as to provide a liquefied hydrocarbon stream 20.

The outlet of the second compressor train 210 is connected to line 219 that is provided with one or more second ambient coolers 217.

The outlet of the first compressor train 110 is connected to one or more first heat exchangers 140a, 140b via the refrigerant line 119. Upstream of the one or more first heat exchangers 140a, 140b, one or more first ambient coolers 117 are provided in the refrigerant line 119. Pressure reduction devices 142a, 142b are provided upstream of the one or more first heat exchangers 140a, 140b to regulate the pressure in these heat exchangers. The one or more heat exchangers 140a, 140b have refrigerant outlets that are connected to the first refrigerant compressor train 110 via lines 134a and 134b. In the embodiment shown in Figure 1, the lines 134a and 134b connect to the first refrigerant compressor train 110 via the optional first suction drum 132.

In the embodiment as shown, two of the one or more heat exchangers 140a, 140b are arranged in a parallel configuration, and each have a single warm tube or warm tube bundle 141a, 141b. Alternatively, it is possible to arrange two parallel warm tubes or warm tube bundles in one heat exchanger. This may be in various types of heat exchangers, such as the kettle type as shown in for instance WO 2008/015224 and spool-wound type as for instance shown in US Patent 6,370,910.

Alternatively to the mutually separate shells for the first heat exchanger(s) 140 relative to the second heat exchanger 260 as shown in Figure 1, the one or more first heat exchangers and the one or more second heat exchangers may be provided in the form of a combined heat exchanger unit, for instance in the form of a plate-type heat exchanger such as a plate-fin heat exchanger and/or a printed circuit heat exchanger, optionally in a cold box. In such a case, the first heat exchanger(s) and the second heat exchanger can be separate sections in the combined heat exchanger unit. An example of such a combined heat exchanger unit employed as single thermal exchange assembly to support cooling and liquefaction of gases by refrigeration using multiple refrigerant circuits is published in US Patent 4,181,174.

One of the one or more first heat exchangers is arranged to receive and cool the gaseous hydrocarbon stream 10. This one will be referred to as first hydrocarbon feed heat exchanger 140a. Optionally, there are one or more other first heat exchangers arranged in the hydrocarbon feed line 10 upstream of the first hydrocarbon feed heat exchanger 140a, to be operated at higher pressures than the first hydrocarbon feed heat exchanger 140a.

Line 40 downstream of the first hydrocarbon feed heat exchanger may be connected directly to line 80 that connects to the second heat exchanger 260 in order to provide the cooled hydrocarbon stream to line 80. However, as shown in the embodiment of Figure 1, the line 40 is connected to withdrawing means in the form of an optional gas/liquid separator 50 that is provided to receive the hydrocarbon stream 40 at approximately the hydrocarbon feed gas pressure, after it has passed through the first hydrocarbon feed heat exchanger 140a.

The optional gas/liquid separator 50 may suitably be a natural gas liquids extraction column and/or employed for the purpose of extraction of natural gas liquids. Typical examples of extraction columns used in a hydrocarbon liquefaction line-up for extraction of natural gas liquids include a simple gas/liquid phase separator vessel, or a more advanced distillation column such as a scrub column and a natural gas liquids extraction column, which typically operates at a lower pressure than a scrub column. In the embodiment shown in Figure 1, the optional gas/liquid separator is provided in the form of a scrub column.

The optional gas/liquid separator 50 has an overhead outlet for discharging a vaporous overhead stream 60 and a bottom outlet for discharging a liquid bottom stream 70. Line 60 for the vaporous overhead stream 60 may be connected to line 80 to provide the cooled hydrocarbon stream in line 80. A splitter 63 may be provided in line 60 or line 80, to draw off a fuel gas stream 62 from the vaporous overhead stream 60.

The liquid bottom stream 70, which may typically comprise C₂ to C₄ constituents as well as C₅+, may be connected to an optional fractionation train 75 to fractionate at least a part of the bottom stream 70 into fractionation product streams 76. A bottom stream heat exchanger 73 may optionally be provided to add heat to at least a part of the bottom stream 70. Part of the bottom stream 70 may be fed back to the optional gas/liquid separator 50 as a reboiled stream 74, preferably comprising, more preferably consisting of, vapour to function as stripping vapour in the optional gas/liquid separator 50.

Another one of the one or more first heat exchangers, which will hereinafter be referenced as second first refrigerant heat exchanger 140b, is arranged to receive the second refrigerant from line 219. To this end, line 219 is connected to the warm tube (or warm tube bundle) 141b. Optionally, there are one or more other first heat exchangers arranged in the second refrigerant line 219 upstream of the second first refrigerant heat exchanger 140b, to be operated at higher pressures than the second first refrigerant heat exchanger 140b. Downstream of the second first refrigerant heat exchanger an optional refrigerant gas/liquid separator 250 is provided to receive the cooled second refrigerant stream 240 after it has passed through the second first refrigerant heat exchanger 140b and separate it into cooled at least by heat exchanging with said first refrigerant from the first refrigerant circuit. Optionally, the second refrigerant from line 219 may be passed through the same one or more first heat exchangers as the hydrocarbon stream instead of passing these streams each through pairs of individual first heat exchangers as shown in Fig. 1.

The cooled hydrocarbon stream 80 and the second refrigerant stream 240 (or vapour and liquid second refrigerant streams 252 respectively 254) are connected to the one or more second heat exchangers 260, to further cool and liquefy the cooled hydrocarbon stream 80 to obtain at least an intermediate liquefied hydrocarbon stream 90 and an at least partially or fully evaporated refrigerant stream 265 at the outlet 262.

Line 90 may be connected to depressurizing equipment 97 comprising optional phase separation equipment to separate flash vapour 92 from the remaining liquid. This is commonly known as an end flash stage, for which there are various systems known in the art. As example, the depressurizing equipment is here embodied as one or more expansion devices 97 to produce a depressurized stream 98 followed by a phase separator 99. The expansion devices may be embodied in the form of an isentropic expander such as work-expander 95 which may be provided in the form of a turbine, and/or an isenthalpic expander such as a Joule-Thomson valve 96. In the embodiment of Figure 1, the isenthalpic expander 96 is suitably be provided downstream of the isentropic expander 95.

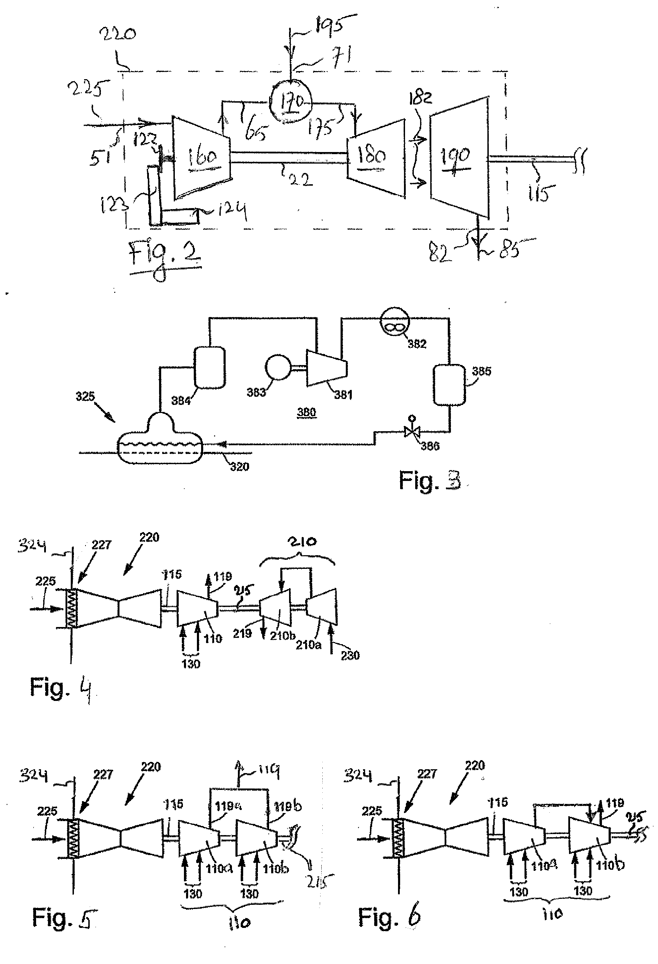

The single gas turbine 220 is a large (ISO-rated ≥ 40 MW) multiple shaft gas turbine comprising at least one auxiliary turbine and at least one inlet air compressor mechanically connected to the auxiliary turbine via a first internal shaft, a combustion chamber arranged downstream of the at least one inlet air compressor to receive compressed combustion air, said auxiliary turbine arranged downstream of the combustion chamber to receive a combusted stream from the combustion chamber, and a power turbine which is separately rotatable from the first internal shaft. This is illustrated in its simplest form in Figure 2.

The at least one inlet air compressor is provided in the form of a core air compressor 160, which in the present example communicates with the air inlet 51 of the gas turbine 220. The core air compressor 160 is shaft connected to a core turbine 180 via a first internal shaft 22. The core turbine 180 thus forms the at least one auxiliary turbine.

The core air compressor 160 discharges, via air discharge line 65, into a combustion chamber 170, where the compressed air is mixed with a fuel stream which enters into the gas turbine 220 from a fuel supply line 195 via a fuel inlet 71. The fuel is allowed to oxidize in the combustion chamber 170 to produce a combusted stream 175 comprising combustion products. The combusted stream 175 is passed to the core turbine 180 where it is allowed to expand. The resulting rotation of the core turbine 180 drives the core air compressor 160 via the first internal shaft 22. The exhaust stream 182 from the core turbine 180 is passed to and further expanded in the power turbine 190, where there may be an adiabatic expansion of the combustion products against the turbine blades, cooling the gas and extracting thermal energy as work to turn output shaft 115. The expanded combustion products exit the power turbine 190 and the gas turbine 220 via exhaust outlet 82 as turbine exhaust stream 85. The power turbine 190 drives the output shaft 115 which in turn is drivingly engaged with the common drive shaft 215, by which a load is imposed to the power turbine 190. As can be seen, power turbine (and thereby the output shaft 115) is freely rotatable relative to the first internal shaft 22.

The single gas turbine is at least 40 MW ISO-rated. The nominal shaft power for mechanical drive on the output shaft 115 is at least 40 MW measured flange-to-flange in simple cycle under ISO conditions.

A start up motor 124 is arranged selectively engagable and disengagable with the first internal shaft 22. The start up motor 124 imparts rotation to the first internal shaft 22 during its engagement with the first internal shaft 22, but when disengaged the internal shaft 22 can rotate freely relative to the start up motor 22. The start up motor can impart a maximum torque and/or power to the first internal shaft 22 that is lower than a threshold torque and/or threshold power, below which the power turbine 190 does not rotate.

Suitably, the start up motor 124 can impart a maximum power of less than 1 MW, preferably less than 500 kW, to the first internal shaft 22. The power is typically in a range of from 50 kW to 300 kW.

To facilitate a driving engagement between the start up motor 124 and the first internal shaft 22, a drive engagement means 122, for instance in the form of a cork wheel, may be provided on the first internal shaft 22. The drive engagement means 122 may be drivingly engaged to a start up motor 124 via a selectively engagable and disengagable gear box 123.

The start up motor 124 may be any type of motor capable of imparting rotation to the first internal shaft 22, such as an electric motor, a hydraulic motor, or an engine. Preferably, the start up motor 124 has a limited drive frequency up to which frequency the first internal shaft 22 can be driven. This frequency is suitably lower than an operation frequency of the first internal shaft 22 during steady operation by fuel-firing of the single gas turbine 122. This way the start up motor 124 can selectively drive the first internal shaft 22 to a frequency that is lower than that operation frequency that is achieved in the first internal shaft 22 during steady operation when the gas turbine is fuel-fired and the start up motor 124 is disengaged.

The apparatus as illustrated in Figure 1 works as follows. The single gas turbine 220 takes in an inlet air stream 225 and a fuel stream (not shown) and during full operation it provides mechanical power on the common drive shaft 215. The drive shaft is mechanically coupled to each compressor in the respective first and second compressor trains 110, 210, and thus all compressors in these first and second compressor trains, are driven by the single gas turbine 220.

During a start-up phase, the start up motor 124 is drivingly engaged with the first internal shaft 22 of the single gas turbine 220, to impart rotation to the first internal shaft 22 during its engagement with the first internal shaft 22. The power turbine 190 does not rotate when the start up motor 124 is drivingly engaged with the first internal shaft 22. During its engagement, the start up motor 124 selectively drives the first internal shaft 22 to a frequency that is lower than an operation frequency that is achieved during steady operation by fuel-firing the single gas turbine. After the fuel is allowed to combust in the combustion chamber 170, the start up motor 124 is disengaged after which the rotation frequency of the first internal shaft 22 increases. The power turbine 190 starts to rotate when the start up motor 124 is disengaged, and the first internal shaft 22 rotates at a frequency higher than the limited drive frequency of the start up motor 124.

When the power turbine rotates, the first and second refrigerants in the first and second refrigerant circuits 100, 200 can start to flow through the first and second compressor trains 110, 210. The first refrigerant in the first refrigerant circuit 100 is compressed in the first compressor train 110, cooled against ambient in the one or more first ambient coolers 117 and distributed over one or more first heat exchangers 140a, 140b. Between the first compressor train 110 and the one or more first heat exchangers 140a, 140b the first refrigerant does not pass through any other compressor that is not on the common drive shaft. Typically, cooling of the first refrigerant in the first ambient cooler(s) 117 causes it to partially, preferably fully, condense. Upstream of each of the first heat exchangers the first refrigerant pressure is let down in the reduction devices 142a, 142b. The first refrigerant is then allowed to evaporate in the first heat exchangers 140a, 140b by drawing heat from the warm tubes or tube bundles 141a, 141b. The evaporated first refrigerant is passed back to the first compressor train 110, without passing through any other compressor that is not on the common drive shaft.

The second refrigerant in the second refrigerant circuit 200, after having been passed from the second heat exchanger 260 to the second compressor train 210 without passing through any other compressor that is not on the common drive shaft 215, is compressed in the second compressor train 210, cooled against ambient in one or more second ambient coolers 217 and then further cooled in one or more of the first heat exchangers. As depicted in Figure 1, the further cooling of the second refrigerant is achieved by passing it through warm tube 141b in second first refrigerant heat exchanger 140b where it is cooled at least by heat exchanging with said first refrigerant, to produce a partially condensed second refrigerant stream 240.

The partially condensed second refrigerant stream 240 is separated into vapour and liquid second refrigerant phases 252 respectively 254. These streams are then condensed and sub-cooled, respectively subcooled, in the one or more second heat exchangers 260 in a manner well known in the art.

It can be seen that the second refrigerant coming from the second compressor train 210 is passed from the second compressor train 210 to the second heat exchanger 260 without passing through any other compressor that is not on the common drive shaft 215.

The liquefied hydrocarbon stream 20 is produced comprising heat exchanging of the hydrocarbon stream against the first refrigerant in the one or more first heat exchangers and against the second refrigerant in the one or more second heat exchangers. Preferably, the hydrocarbon stream being heat exchanged in the one or more second heat exchangers has passed through the one or more first heat exchangers.

Described with reference to the more detailed embodiment of Fig. 1, the gaseous hydrocarbon stream 10 is cooled in one or more of the first heat exchangers, as shown in Figure 1 by passing the gaseous hydrocarbon stream through the warm tube 141a in first hydrocarbon feed heat exchanger 140a, to produce a partially condensed hydrocarbon stream 40.

The partially condensed hydrocarbon stream 40 is separated into vaporous overhead stream 60 and liquid bottom stream 70. Optionally, at least a part of the bottom stream 70 is warmed in bottom stream heat exchanger 73 and at least part of the warmed bottom stream 74 may be fed back to the optional gas/liquid separator 50 as a reboiled stream. The remaining part is typically led to the fractionation train 75 where it is fractionated into one or more fractionation product streams. Typical fractionation columns in use in a natural gas liquids fractionation train are a demethanizer, a deethanizer, a depropanizer and a debutanizer.

The vaporous overhead stream 60 is fed into line 80 as a cooled hydrocarbon stream 80. The cooled hydrocarbon stream 80 is then fed to one or more of the second heat exchangers 260 in a manner known in the art where it is liquefied using the second refrigerant. Herewith is produced an intermediate liquefied hydrocarbon stream 90.

This intermediate liquefied hydrocarbon stream 90 may be depressurized in the one or more expansion devices 97 and the depressurized stream 98 led to phase separator 99, where any vaporous constituents, mainly flash vapour, are separated from the liquid hydrocarbons in stream 98. The liquid hydrocarbons are removed from the phase separator 99 as liquefied hydrocarbon product stream 20; the vaporous constituents are drawn from the phase separator 99 as end flash stream 92.

The optional inlet air cooling heat exchanger 227 mentioned hereinabove is arranged in the first inlet air stream 225 to cool and chill the first inlet air streams. Preferably the temperature of the first inlet air stream 225 is lowered to a temperature of lower than at least 5 °C below the ambient temperature.

The temperature of the air source is what is considered to be "ambient temperature" in the present context. The range of temperatures that typically constitutes "ambient temperature" varies with the geographic location where the apparatus and method would be employed. However optional inlet air cooling is particularly beneficial if the ambient temperature is between about 5 °C and 60 °C, preferably between 10 °C and 60 °C, more preferably between 25 °C and 60 °C.

A separator (not shown), such as a vertical vane type separator, and associated drain facilities may be provided downstream of the inlet air cooling heat exchanger 227 to remove moisture that may develop during the cooling of the inlet air stream. Drain facilities may also be provided in the air cooling heat exchangers 227 to drain off moisture from this heat exchanger.

The apparatus may further comprise a coolant circuit 300, wherein a coolant fluid can be circulated for chilling the first inlet air stream 225. In the embodiment as shown, there is provided a storage tank 310 wherein the coolant fluid can be stored. The coolant fluid is preferably a liquid and/or inflammable for safety reasons. Suitable coolants include water and brine, possibly admixed with an anti-freezant such as a glycol and/or a corrosion inhibitor.

The coolant circuit 300 further comprises means for actively chilling the coolant fluid to provide a chilled coolant 320. In the embodiment of Figure 1, a chiller 325 is provided for that purpose. The chiller 325 is arranged to receive a cold fluid CF capable of withdrawing heat from the coolant fluid and thereby to provide the chilled coolant in line 320. The cold fluid CF can be obtained from numerous sources, as will be further illustrated hereinbelow.

For the purpose of the present specification, "chilled coolant" is understood to be a fluid that has a temperature lower, preferably by at least 5 °C, than that of the ambient air temperature. The chilled coolant can be prepared by actively chilling the fluid, using refrigeration duty from any refrigerant or cold stream.

To assist the flow of the coolant fluid in the coolant circuit, a pump 305 is provided. The pump may be provided anywhere in the circuit. Suitably, as proposed in the embodiment of Figure 1, the pump 305 has its low pressure inlet connected to the storage tank 310 via line 315 and its high-pressure outlet connected to the chiller 325.

The first inlet air cooling heat exchanger 227 is arranged in line 320 to cool the first inlet air stream 225 with the chilled coolant 320. A flow control valve 339 may optionally be provided in line 320.

The coolant fluid in the storage tank 310 is pumped or otherwise led to chiller 325, wherein it is actively chilled to provide chilled coolant 320 by heat exchanging against cold fluid CF. The cooling duty available in the chilled coolant 320 is used to chill the inlet air stream of the single gas turbine. After having cooled the first inlet air streams 225, the coolant may led back via line 324 to the storage tank 310 for re-use.

It is preferred that the first air inlet stream 225 leaving the inlet air heat exchanger 227 has a temperature of below 30 °C, more preferably below 25 °C, even more preferably below 20 °C. The first inlet air stream 225 is preferably not cooled to lower than about 5 °C to ensure that formation of ice is avoided. A suitable target temperature for the first air inlet stream 225 leaving the inlet air heat exchanger 227, in particular when outside ambient air is used, is 10 °C.

The cooling duty for actively chilling of the coolant fluid in the one or more chillers 325 may be obtained from a wide variety of sources. For instance, it may use chilling duty provided by a thermally driven chilling process. Particularly, the one or more chillers 325 may comprise one or more thermally driven chillers. The thermally driven chilling process and/or the thermally driven chillers may be operated using waste heat from the liquefaction process, e.g. the waste heat from the gas turbine 220. Thermally driven chillers are known in the art. A relatively common example is formed by the group consisting of absorption chillers. One example of an absorption chilling is based on evaporating liquid ammonia in the presence of hydrogen gas, providing the cooling. More common in large commercial plants are so-called lithium/bromide absorption chillers. A lithium/bromide absorption chiller uses a solution of lithium/bromide salt and water. Another example of thermally driven chillers known in the art is formed by the group consisting of adsorption chillers. Still another example is formed by the group consisting of absorption heat pumps. Their principle of operation is similar to absorption chillers.

The ultimate power source for the active chilling may be solar power, including photovoltaic solar power or thermal solar power (e.g. in the form of steam). An example of a gas turbine provided with solar powered inlet air chilling based on absorption chilling is for instance shown in US application publication 2003/0074901.

Alternatively or in addition to thermally driven chilling, the actively chilling of the coolant fluid may use a chilling refrigerant from a dedicated mechanically driven chilling refrigerant circuit. As illustrated in Figure 3, the dedicated chilling refrigerant circuit 380 is provided with its own compressor 381 and means for rejecting heat from the compressed chilling refrigerant to the ambient such as cooler 382. The compressor 381 may be driven by any suitable driver 383, suitably an electric motor but not necessarily so. The chiller 325 is depicted in the form of a kettle. A Joule Thomson valve 386 is provided between the kettle 325 and the cooler 382, downstream of an optional accumulator 385. A knockout drum 384 may be provided between the kettle 325 and the suction inlet of the compressor 381 as a precaution. The chilling refrigerant may consist of any component or mixture suitable for removing heat at approximately the temperature level of the ambient temperature. Examples include butane, iso-butane, propane, ammonia.

Alternatively or in addition thereto, it may use refrigeration duty from a stream that is already available in the liquefaction line-up. For instance, it may use refrigeration duty taken from the first refrigerant circuit and/or the second refrigerant circuit.

Of these two, it is preferred to use refrigeration duty from the first refrigerant circuit 100 because the refrigerant in the first refrigeration circuit 100 is generally more efficient at removing heat at the desired temperature level of the chilling coolant. This can or instance be done by providing chiller 325 in the form of a kettle wherein the first refrigerant from line 119 is evaporated at a desired suitable pressure level. Downstream of the chiller 325 the first refrigerant may be recompressed via first refrigerant compressor train 110 itself, for instance by feeding the refrigerant downstream of chiller 325 to the knock out drum 132, or by a dedicated compressor that is also driven on the common drive shaft 215.

Refrigeration duty from the second refrigerant circuit may be used by allowing a slip stream from for instance line 240 to evaporate in and/or pass through chiller 325 at a desired pressure level as cold stream CF. The slip stream may also be drawn from other suitable places in the second refrigerant circuit 200, such as from the liquid second refrigerant stream in line 254 if optional refrigerant gas/liquid separator 250 is present. Irrespective of the origin of the slipstream, downstream of the chiller the slip stream may be fed back to the second compressor 210 and/or recompressed using a dedicated compressor driven on the common drive shaft 215.

The cold fluid CF may be obtained from a single source or it may comprise a mixture of fluids from two or more sources. Alternatively, instead of one cold fluid CF, there may be two or more cold fluids, each arranged to remove heat from the coolant fluid in line 320. In this case, it may be a suitable choice of design to use a plurality of chillers, either arranged in parallel or in series in line 320. Suitably, a separate chiller is provided for each source of cold fluid.

Optionally, a controller (not shown) is arranged to control the selection of the source of refrigeration duty between first and second refrigeration circuit based on the refrigeration circuit that is the least constraining of the two.

In addition to and/or instead of one or more of the refrigerant streams indicated above, the coolant may be chilled using refrigeration duty provided by any other cold stream available in the process. For instance, if gas/liquid phase separator 50 is present, the cold fluid CF may be derived from or contain the liquid bottom stream 70. In this case, optional heat exchanger 73 may be in communication with stream 320 or the optional heat exchanger 73 may be one of the one or more chillers 325.

Other examples of cold streams that may be used as stream CF to provide part of or all of the refrigeration duty for the active cooling of the coolant fluid to provide the chilled coolant 320, include fuel gas stream 62, end flash stream 92, and any cold stream from (optional) fractionation train 75. Figure 1 shows symbolically optional chillers 61 and 91 that could be used as chiller(s) 325 or be otherwise positioned in communication with line 320. Boil off gas, for instance from a storage tank wherein the liquefied hydrocarbon stream 20 may be stored, may also be used to provide part of or all of the refrigeration duty for the active cooling of the coolant.

In alternative embodiments, the second refrigerant may be fully condensed after its cooling against the first refrigerant. In such embodiments, obviously the optional refrigerant gas/liquid separator 250 needs not be provided. There are also alternative embodiments wherein the second refrigerant is not fully condensed but wherein nevertheless no gas/liquid phase separation is needed, for instance because full condensation is achieved in a subsequent heat exchanging against a further refrigerant or by auto-cooling.

The apparatus may have various modifications compared to what is specifically depicted in Figure 1. Some modifications and alternatives have already been mentioned hereinabove. In another optional modification, for instance, first compressor train 110 may have a multiple of inlets at different pressure levels in a manner known in the art. The first compressor train 110 and/or the second compressor train 210 may each be embodied in the form of two or more frames arranged on the common drive shaft 215, in a manner known in the art.

The invention does not exclude the possibility to provide a duplicate a single gas turbine with first and second compressor trains, as described above, in a parallel configuration with the (original) single gas turbine with first and second compressor trains. All lines to and from the single gas turbine with first and second compressor trains (coolant lines, lines to supply and discharge first and second refrigerant streams to and from the first and second compressor trains) should be branched off to the duplicate and appropriate valving arrangement should be provided to isolate the single gas turbine and first and second compressor trains so that the duplicate can perform its function instead. If desired, both the original and the duplicate can be operated simultaneously in parallel with each other to produce more of liquefied hydrocarbons per unit of time.

Optionally (not shown), an overhead heat exchanger may be provided in line 60 in a way known in the art. Such an overhead heat exchanger may form part of the one or more first heat exchangers, and it may for instance be connected to line 119 to obtain a fraction of the first refrigerant. Where such an overhead heat exchanger is provided in line 60, an optional overhead gas/liquid separator is provided downstream of the overhead heat exchanger in order to remove any condensed fraction from stream downstream of the overhead heat exchanger. The vapour outlet of the overhead gas/liquid separator may then be connected to line 80 to provide the cooled hydrocarbon stream. The bottom liquid outlet of the overhead gas/liquid separator may be connected to the gas/liquid separator 50 to feed back at least a portion of the condensed fraction as a reflux stream. The fuel gas stream 62 may be drawn from the vapour stream.

In an alternative embodiment, the optional gas/liquid separator 50 is located upstream of the first hydrocarbon feed heat exchanger 140a. The overhead outlet of the gas/liquid separator could in such an alternative embodiment be connected to line 10 in Figure 1, and line 40 could the be connected directly to line 80 to provide the cooled hydrocarbon stream to the second heat exchanger 260. Such embodiments may have an expander upstream of the optional gas/liquid separator 50, and typically one or more recompressors and/or booster compressors upstream of the first hydrocarbon feed heat exchanger 140a, and/or other heat exchangers to pre-cool the feed to the optional gas/liquid separator 50. Such embodiments are known in the art and need not be further detailed here.

In the embodiment as shown in Figure 1, the first refrigerant is a single component refrigerant consisting essentially of propane, while the second refrigerant is a mixed refrigerant. A mixed refrigerant or a mixed refrigerant stream as referred to herein comprises at least 5 mol% of two different components. The mixed refrigerant may contain two or more components selected from the group consisting of: nitrogen, methane, ethane, ethylene, propane, propylene, butanes. A common composition for a mixed refrigerant can be:

| | |
|---|---|
| Nitrogen | 0-10 mol% |
| Methane (C1) | 30-70 mol% |
| Ethane (C2) | 30-70 mol% |
| Propane (C3) | 0-30 mol% |
| Butanes (C4) | 0-15 mol% |

The total composition comprises 100 mol%.

However, the methods and apparatus disclosed herein may further involve the use of one or more other refrigerants, in separate or overlapping refrigerant circuits or other cooling circuits. Moreover, the first refrigerant may be a mixed refrigerant (such as described for instance in US Pat. 6,370,910) and/or the second refrigerant may be a single component refrigerant (such as consisting essentially of ethane, ethylene, methane or nitrogen). The invention may also be applied in the so-called Axens LIQUEFIN process, such as described in for instance the paper entitled "LIQUEFIN: AN INNOVATIVE PROCESS TO REDUCE LNG COSTS" by P-Y Martin et al, presented at the 22nd World Gas Conference in Tokyo, Japan (2003).

The gaseous hydrocarbon stream 10 to be cooled and liquefied may be derived from any suitable gas stream to be cooled and liquefied, such as a natural gas stream obtained from natural gas or petroleum reservoirs or coal beds. As an alternative the gaseous hydrocarbon stream 10 may also be obtained from another source, including as an example a synthetic source such as a Fischer-Tropsch process.

When the gaseous hydrocarbon stream 10 is a natural gas stream, it is usually comprised substantially of methane. Preferably the gaseous hydrocarbon stream 10 comprises at least 50 mol% methane, more preferably at least 80 mol% methane.

Depending on the source, natural gas may contain varying amounts of hydrocarbons heavier than methane such as in particular ethane, propane and the butanes, and possibly lesser amounts of pentanes and aromatic hydrocarbons. The composition varies depending upon the type and location of the gas.

Conventionally, the hydrocarbons heavier than methane are removed as far as needed to produce a liquefied hydrocarbon product stream in accordance with a desired specification. Hydrocarbons heavier than butanes (C4) are removed as far as efficiently possible from the natural gas prior to any significant cooling for several reasons, such as having different freezing or liquefaction temperatures that may cause them to block parts of a methane liquefaction plant.

The natural gas may also contain non-hydrocarbons such as H₂O, N₂, CO₂, Hg, H₂S and other sulphur compounds, and the like. Thus, if desired, the gaseous hydrocarbon stream 10 comprising the natural gas may be pre-treated before cooling and at least partial liquefaction. This pre-treatment may comprise reduction and/or removal of undesired components such as CO₂ and H₂S or other steps such as early cooling, pre-pressurizing or the like. As these steps are well known to the person skilled in the art, their mechanisms are not further discussed here.

It will be understood that the present invention is applicable not only to the drive scheme as specifically illustrated in Figure 1, but to other drives schemes as well. Figures 4 to 6, which are not intended to form an exclusive list, illustrate some possible alternative options.

For instance, Figure 4 shows the first refrigerant in line 130 being offered to a plurality of inlets in the first compressor train 110 each at a different pressure, such as shown in for instance US Pat. 6,370,910 or US Pat. 4,698,080 in the context of various process types. The second compressor train 210 for compressing the second refrigerant is embodied in successively arranged low pressure second refrigerant compressor 210a and high pressure second refrigerant compressor 210b, both being driven on the common shaft 215 by the single gas turbine 220. The second refrigerant in line 230 is fed to the low pressure second refrigerant compressor 210a and the high pressure second refrigerant compressor 210b discharges into line 219.

Figure 5 shows the first refrigerant in line 130 being offered to a plurality of inlets in the first compressor train 110 each at a different pressure such as is described in more detail in embodiments disclosed in for instance US Pat. 6,637,238 (advertised under the name "split propane"); US application publication 2008/0289360; US Pat. 6,962,060. In the particular example of present Figure 5, the first compressor train 110 is embodied in two compressor casings 110a, 110b, both being driven on the common shaft 215 by the single gas turbine 220.

Figure 6 shows an embodiment wherein all of the first refrigerant substreams eventually pass through the highest compression stage of one of the compressor casings (e.g. casing 110b) in the first compressor train 110, such as is described more broadly and in more detail in for instance WO 2009/071538.

Clearly, the common drive shaft 215 is only partially shown in Figures 5 and 6, to indicate that any desired configuration can be selected for the second compressor train on the common shaft 215.

The invention can be applied on still other drive schemes as well.

The invention described hereinabove is not limited to two refrigeration circuits: it can also be applied in liquefaction processes and apparatuses employing three or more compressor trains for three or more refrigeration cycles such as known from for example US Pat. 6,962,060; WO 2008/020044; US Pat. 7,127,914; DE3521060A1; US Pat. 5,669,234 (commercially known as optimized cascade process); US Pat. 6,253,574 (commercially known as mixed fluid cascade process); US Pat. 6,308,531; US application publication 2008/0141711; Mark J. Roberts et al "Large capacity single train AP-X(TM) Hybrid LNG Process", Gastech 2002, Doha, Qatar (13-16 October 2002). In accordance with the present invention, at least two, possibly all, of the three or more refrigeration circuits are fully driven by compressor trains on the common drive shaft.

A commercially available gas turbine suitable for the present invention is sold by General Electric under the name LMS100™. This is a compressor of so-called aeroderivative type. Details on the design, properties and operation of the GE LMS 100 (TM) gas turbine may be found in the GE Energy publication GER-4222A (06/04) titled "New High Efficiency Simple Cycle Gas Turbine - GE's LMS100TM", which publication is incorporated herein by reference. Other suitable examples include Rolls Royce Trent 60, and General Electric, LM6000. Clearly, equivalent gas turbines from other manufactures may be employed as well.

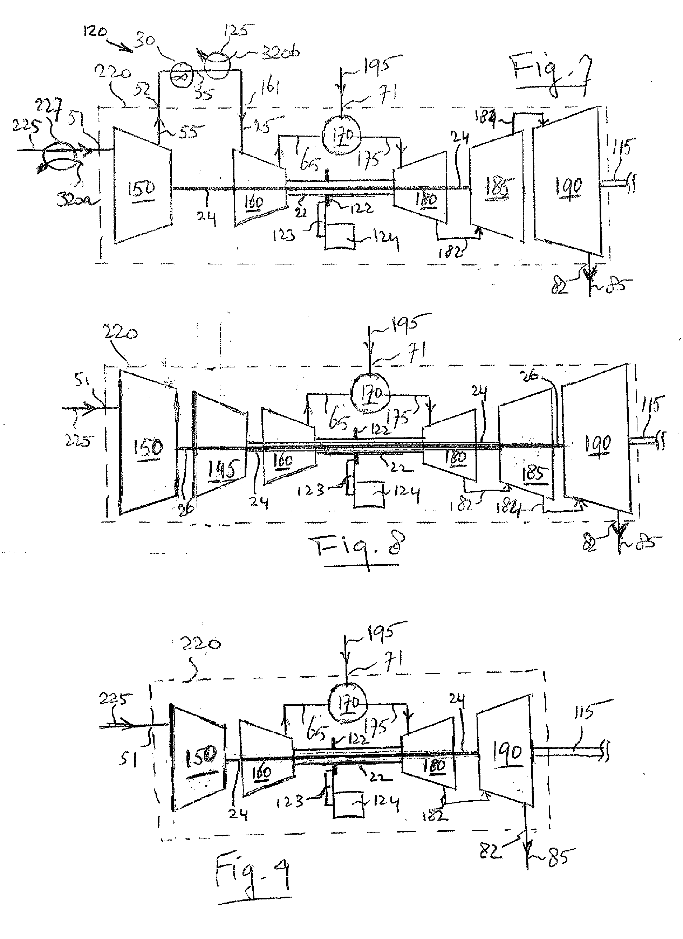

Figures 7 to 9 each illustrate an example of a gas turbine that can be used as the single gas turbine 220 in the invention.

Some commercially available gas turbines, such as for example LMS100^{™}, comprise an additional air compressor stage, which provides the option of interstage cooling of the combustion air. An example is illustrated in Figure 7. The combustion air inlet system comprises a first air inlet 51 into the gas turbine 220 for taking in the first inlet air stream 225 from the air source being at ambient temperature.

Similar to the gas turbine of Figure 2, the gas turbine 220 illustrated in Figure 7 still comprises the core air compressor 160 which is shaft connected to the core turbine 180 via the first internal shaft 22. However, in this case, a low pressure compression stage comprising low pressure compressor 150 is provided upstream of the core air compressor 160. The exhaust stream 182 from the core turbine 180 is passed to and further expanded in an intermediate pressure turbine 185. In the embodiment of Figure 7 the low pressure compressor 150 is shaft coupled to, and driven by, the intermediate pressure turbine 185 via a second internal shaft 24. The second internal shaft 24 may extend through an axial central bore provided in the first internal shaft 22, where it can be rotating relative to the first internal shaft 22 and the power turbine 190. The exhaust stream 184 from the intermediate pressure turbine 185 is passed to and further expanded in the power turbine 190, as described above with reference to Figure 2.

An optional intercooling stage 120 is arranged to receive a low pressure compressed air stream 55 passing through the low pressure compressed air stream outlet 52. The low pressure air compressor 150 connects the first air inlet 51 with a low pressure compressed air stream outlet 52. The intercooling stage 120 comprises one or more cooling units, such as intercooling ambient coolers and other intercooling heat exchangers, to produce an intercooled air stream 25 from the low pressure compressed air stream 55. A second air inlet 161 is provided into the gas turbine 220, for taking in the intercooled air stream 25 from the intercooling stage 120, whereby the combustion chamber 170 is fluidly connected to the second air inlet 161 via the core air compressor 160. On the other side, the combustion chamber 170 is connected to the core turbine 180.

The intercooling stage 120 may comprise an intercooling chilling heat exchanger 125 arranged to chill the low pressure compressed air 55 to a temperature that is lower than the ambient temperature. The intercooling stage 120 may further comprise an intercooling ambient cooler 30 upstream of the intercooling chilling heat exchanger 125, preferably between the intercooling chilling heat exchanger 125 and the low pressure compressed air stream outlet 52.

In more detail, the low pressure compressed air stream 55 is passed via the low pressure compressed air stream outlet 52 from the gas turbine 220 to the intercooling stage 120. The intercooling stage 120 discharges a discharge stream in the form of a chilled low pressure air stream 25, which is fed back into the gas turbine 220 via the second air inlet 161 provided therein.

The intercooling ambient cooler 30 may be provided in the form of a conventional air-to-air or air-to-water heat exchanger which cools the low pressure compressed air stream 55 to provide an ambient-cooled compressed air stream 35. The effectiveness of the intercooling ambient cooler 30 is dependent upon the prevailing ambient conditions. As the ambient temperature increases, the temperature of the ambient-cooled compressed air stream 35 will also increase.

Therefore the intercooling stage preferably further comprises an intercooling chilling step to bring the low pressure compressed air stream 55 to an intercooling temperature that is lower, preferably by at least 5 °C, than ambient temperature. This can be accomplished in various ways.

In the embodiment of Figure 7, the cooled compressed air stream 35 is passed to intercooling chilling heat exchanger 125, wherein it is further cooled to provide the chilled low pressure compressed air stream 25 by consuming cooling duty as described above in relation to the chilling of the first inlet air stream 225. Suitably, the chilled coolant 320 is divided into two substreams (320a, 320b) upstream of the inlet air cooling heat exchanger 227, each of the substreams passed through one of the inlet air cooling heat exchanger 227 and the intercooling chilling heat exchanger 125, and optionally recombined downstream of the inlet air cooling heat exchanger 227 and the intercooling chilling heat exchanger 125 to eventually form one single coolant fluid stream 315.

By further cooling the cooled low pressure compressed air stream 35 in the intercooling chilling heat exchanger 125, the density of the stream is increased beyond that which can be achieved using ambient cooler 30 alone, such that the mass flow to the compressor blades or cylinders of core air compressor 160 is increased, improving the power output of the gas turbine 220.

Figure 8 illustrates another example of a gas turbine suitable for use in the present invention. In this case, an intermediate pressure air compressor 145 is added between the low pressure air compressor 150 and the core air compressor 160. Moreover, a third internal shaft 26 is provided, freely rotatable relative to both the first internal shaft 22 and the second internal shaft 24. The first internal shaft 22 drivingly connects the core turbine 180, the second internal shaft 24 drivingly connects the intermediate pressure turbine 185 with the intermediate pressure air compressor 145, and the third internal shaft 26 connects the power turbine 190 to the low pressure air compressor 150. The start up motor 124 is disengagably arranged relative to the first internal shaft, which in turn is separately rotatable from the power turbine 190.

Figure 9 schematically shows yet another example a gas turbine suitable for use in the present invention. This example is comparable to the example of figure 8, without the intermediate pressure air compressor 145 and the intermediate pressure turbine 185. The second internal shaft now connects the power turbine 190 to the low pressure air compressor 150. No third internal shaft is necessary.

The indirect inlet air heat exchanger 227 as described above may be applied in the combustion air inlet systems any of the gas turbines shown in Figs. 2, and 7 to 9.

An intercooling stage 120 such as described with reference to Figure 7 may be applied in any gas turbine in the invention which has two or more air compressors. Specifically, it may be applied between the low pressure compressor 150 and the core air compressor 160 of the gas turbine of Figure 9, and between the low pressure compressor 150 and the intermediate pressure compressor 145 and/or the intermediate pressure compressor 145 and the core air compressor 160 of the gas turbine illustrated in Fig. 8.

The person skilled in the art will understand that the present invention can be carried out in many various ways without departing from the scope of the appended claims.

## Claims

1. Method of cooling a gaseous hydrocarbon stream to produce a liquefied hydrocarbon stream, comprising:
- cycling a first refrigerant in a first refrigerant circuit, comprising passing at least a first part of the first refrigerant from at least one first heat exchanger to a first compressor train comprising one or more first compressors on a common drive shaft without passing through any other compressor that is not on the common drive shaft, compressing at least the first part of the first refrigerant in the first compressor train, and passing the at least first part of the first refrigerant from the first compressor train to the at least one first heat exchanger without passing through any other compressor that is not on the common drive shaft;
- cycling a second refrigerant in a second refrigerant circuit, comprising passing at least a first part of the second refrigerant from at least one second heat exchanger to a second compressor train comprising one or more second compressors on said common drive shaft without passing through any other compressor that is not on the common drive shaft, compressing said first part of the second refrigerant in the second compressor train, and passing the at least first part of the second refrigerant from the second compressor train to the at least one second heat exchanger without passing through any other compressor that is not on the common drive shaft;
- providing a liquefied hydrocarbon stream comprising heat exchanging of a hydrocarbon stream against the first refrigerant in the at least one first heat exchanger and against the second refrigerant in the at least one second heat exchanger;
- driving the common drive shaft with each of the at least one first compressor and each of the at least one second compressor in the first and second compressor trains with one single gas turbine, which single gas turbine is a multiple shaft gas turbine with a shaft power for mechanical drive of at least 40 MW under ISO conditions, comprising at least one auxiliary turbine and at least one inlet air compressor mechanically connected to the auxiliary turbine via a first internal shaft, a combustion chamber arranged downstream of the at least one inlet air compressor to receive compressed combustion air, said auxiliary turbine arranged downstream of the combustion chamber to receive a combusted stream from the combustion chamber, and a power turbine drivingly engaged with the common drive shaft, which power turbine is separately rotatable from the first internal shaft.

2. The method of claim 1, wherein prior to said providing of said liquefied hydrocarbon stream, a start up motor is drivingly engaged with the first internal shaft, and wherein the start up motor is disengaged before said providing of said liquefied hydrocarbon stream.

3. The method of claim 2, wherein the start up motor imparts rotation to the first internal shaft during its engagement with the first internal shaft.

4. The method of claim 2 or 3, further comprising fuel-firing the single-gas turbine when the start up motor is disengaged, said fuel-firing comprising supplying a fuel to the single gas turbine, and wherein during its engagement the start up motor selectively drives the first internal shaft to a frequency that is lower than an operation frequency that is achieved during steady operation by fuel-firing the single gas turbine.

5. The method of any one of claims 2 to 4, wherein the power turbine does not rotate when the start up motor is drivingly engaged with the first internal shaft.

6. The method of any one of the preceding claims, further comprising:
- passing a first inlet air stream for combustion to the single gas turbine;
- providing a stream of a chilled coolant;
- cooling said first inlet air stream with the chilled coolant.

7. The method of any one of the preceding claims, wherein the hydrocarbon stream being heat exchanged in the at least one second heat exchanger has passed through the at least one first heat exchanger.

8. The method of any one of the preceding claims, further comprising cooling the second refrigerant at least by heat exchanging with said first refrigerant from the first refrigerant circuit.

9. The method of any one of the preceding claims, wherein the first refrigerant has a composition that is different from that of the second refrigerant.

10. The method of any one of the preceding claims, wherein the first and second refrigerant circuits are separate from each other in that is no fluid communication between the first and the second refrigerant circuits.

11. Apparatus for cooling a gaseous hydrocarbon stream to produce a liquefied hydrocarbon stream, comprising:
- a first refrigerant circuit comprising a first refrigerant, a first compressor train comprising one or more first compressors on a common drive shaft, the first compressor arranged to compress at least a first part of said first refrigerant;
- at least one first heat exchanger fluidly connected to the first compressor train via a first low pressure path and a first high pressure path, the first low pressure path arranged to convey at least the first part of the first refrigerant from the at least one first heat exchanger to the first compressor train and being free from any other compressor that is not on the common drive shaft, and the first high pressure path arranged to convey at least the first part of the first refrigerant from the first compressor train to the at least one first heat exchanger and being free from any other compressor that is not on the common drive shaft;
- a second refrigerant circuit comprising a second refrigerant, a second compressor train comprising one or more second compressors on said common drive shaft, the second compressor train arranged to compress at least a first part of said second refrigerant;
- at least one second heat exchanger fluidly connected to the second compressor train via a second low pressure path and a second high pressure path, the second low pressure path arranged to convey at least the first part of the second refrigerant from the at least one second heat exchanger to the second compressor train and being free from any other compressor that is not on the common drive shaft, and the second high pressure path arranged to convey at least the first part of the second refrigerant from the second compressor train to the at least one second heat exchanger and being free from any other compressor that is not on the common drive shaft;
- a hydrocarbon path, connecting a source of a gaseous hydrocarbon stream to a discharge channel for a liquefied hydrocarbon stream, and passing through the at least one first heat exchanger in indirect heat exchanging arrangement with the first refrigerant and through the at least one second heat exchanger in indirect heat exchanging arrangement with the second refrigerant,
- one single gas turbine drivingly engaged with the common drive shaft with each of the at least one first compressor and each of the at least one second compressor in the first and second compressor trains, which single gas turbine is a multiple shaft gas turbine with a shaft power for mechanical drive of at least 40 MW under ISO conditions, comprising at least one auxiliary turbine and at least one inlet air compressor mechanically connected to the auxiliary turbine via a first internal shaft, a combustion chamber arranged downstream of the at least one inlet air compressor to receive compressed combustion air, said auxiliary turbine arranged downstream of the combustion chamber to receive a combusted stream from the combustion chamber, and a power turbine drivingly engaged with the common drive shaft, which power turbine is separately rotatable from the first internal shaft.

12. The apparatus of claim 11, further comprising a start up motor arranged selectively engagable and disengagable with the first internal shaft.

13. The apparatus of claim 12, wherein the start up motor imparts rotation to the first internal shaft during its engagement with the first internal shaft.

14. The apparatus of claim 12 or 13, further comprising a fuel supply line arranged to allow fuel to the single gas turbine for fuel-firing the single gas turbine when the start up motor is disengaged, and wherein the start up motor has a limited drive frequency up to which frequency the first internal shaft can be driven by the start up motor, which frequency is lower than an operation frequency of the first internal shaft during steady operation by fuel-firing of the single gas turbine.

15. The apparatus of any one of claims 12 to 14, wherein the start up motor can impart a maximum torque and/or power to the first internal shaft that is lower than a threshold torque and/or threshold power below which the power turbine does not rotate.

16. The apparatus of any one of claims 11 to 15, further comprising:
- a combustion air inlet system for passing a first inlet air stream to the one single gas turbine for combustion therein, the combustion air inlet system comprising an indirect inlet air heat exchanger wherein the first inlet air stream is heat exchanged against a stream of a chilled coolant.
